# EUROPEAN PATENT APPLICATION

(11) **EP 1 469 405 A1**
(43) Date of publication of application: **20.10.2004**
(21) Application number: 03008082.4
(22) Date of filing: 15.04.2003
(51) Int. Cl.: G06F 17/60, G06F 17/30, H04L 29/06

(54) **System and method for providing requested units of information over a mobile network**

(71) Applicant: Ferraz de Oliveira, Jorge Alberto, 2750-398 Cascais (PT); Gago da Câmara Botelho de Medeiros, José Honorato, 2765-262 Estoril (PT)
(72) Inventor: Ferraz de Oliveira, Jorge Alberto, 2750-398 Cascais (PT); Botelho de Medeiros, José Honorato Gago da Camara, 2765-262 Estoril (PT)
(74) Representative: Lang, Johannes, Dipl.-Ing.

(57) **Abstract**

A database management system is described, which is comprising a first database server for storing and retrieving units of data and a second database server for controlling said first database server, both database servers being connected to each other by network means, wherein said first database server is connected to a mobile network and further controlled via said mobile network by mobile devices of mobile network customers and transmits via said mobile network upon request by said customers the said units of data to said mobile devices of said customers, and wherein the data units stored in the first database server are organized in voice guides boxes residing in the first database server.

## Description

The present invention relates to applications for mobile and wireless devices and, in particular, a database management system for storing and retrieving units of data which is connected to a mobile network and coupled with another database management system for ordering, charging and statistical purposes. More particularly the invention relates to a database management system for guiding customers through or at different sites which can be tourist attractions, building complexes or places of interest (such as museums, churches, monasteries and any other site of historical, architectural or other interest) or even town or regions of a country, and providing them with information of interest regarding these sites or regarding at these sites exposed objects (such as paintings, graphic arts, sculptures, statues and other items being exhibited) by using their mobile devices as information devices for transmitting previously ordered units of information related to these sites or objects upon request of the customers (information-on-demand).

Usually, tourists attain at tourist attraction sites guided tours during which they are provided with information about different themes related to these sites or related to objects of interest located and exposed at these sites. Such information can comprise information related to history, architecture, arts and general information about these sites and about any exposed object of interest.

Many disadvantages of such traditional guided tours, such as the costly expenses for attaining the tours, the necessity of meeting a person which is a tourist guide at a fixed time and thus keeping the scheduled appointment with him, or the rather inflexible and strict path such a guided tour takes, are well known. A less costly and more flexible way of being informed about these sites or objects, is to carry a printed tourist guide (such as a book, booklet or leaflet) with oneself, but which can be less convenient, more time-consuming, or more physically and intellectually exhausting, due to the fact that a tourist visiting several such sites has to carry a plurality of such tourist guides with him and that he has not only to pay attention to the site or the object, but also has to read by himself and therefore pay also attention to the text of such tourist guide.

Another more convenient way of being informed about these sites or objects is renting a listening device at the entrance of such a site, for a small fee. There are various types of devices existing which fall mainly into two general categories: those that carry the audio records on Compact Discs (CDs) and those that use internal solid-state memories instead. Using the ones based on CDs, the visitor has to follow a predetermined sequence along such objects, while listening to the corresponding explanations, whereas the listening devices based on internal solid-state memories are more flexible regarding the taken path within such a site. Usually, they have a small keyboard and the visitor is free to select the information about such an object he is interested in just by inputting the appropriate number corresponding to such an object, as might be shown on a label located besides such an object, or as might be shown on an accompanying leaflet with a map of such a site, where the location and number of such an object is depicted. Thus, as advantages, these devices are easy to use and have a predictable good audio quality. But they also have disadvantages: they have to be acquired and are therefore expensive for the owner or provider (and therefore for the customer) and have to be stored locally, maintained and replaced in case of failure. Furthermore, due to memory limitations, they are monolingual which causes a larger number of devices being present at such a site and they are limited to the providing of audio information. Other disadvantages are that these devices have to be managed, rented out and be retrieved back at the end of the visit and their use is restricted to such a site or, at least, not too far away from the distribution point. Furthermore, they lack flexibility regarding the audio information kept in such a device, because any modification requires an intervention in each of these devices at such a site. Finally, being essentially an off line system, its management can be only local and there is not much central control upon the revenues generated by the service at the various sites it is implemented.

In WO 01/86613A2 a portable multimedia tourist guide device is disclosed with a GPS positioning module for determining its position and a computer system storing the tourist information data on an external hard disk. Such a system has also the above mentioned disadvantage that it is costly because a specific device has to be bought or rented by the tourist.

Moreover, another aspect, in general, are the environmental rules or requirements, e.g. such as the keeping a moderate loudness or volume level, related to special sites (such as museums, religious buildings or libraries) which are not to be offended against or to be exceeded. By loud speech of different persons working as tourist guides at such a site or a tourist reading a printed tourist guide with a loud voice in order to inform his accompanying tourist party or any travel companion, it is clearly offended against any rule related to the keeping of such moderate volume level. Also, other tourists and people which are interested in these sites or objects, are disturbed in their power of concentration or in their emotional feelings. Further, a certain volume level can degrade the ability to receive all given information and understand it. Also, for the owners or providers of such a tourist site or such objects, providing of such information-on-demand, either provided at the site itself or provided via the internet, can be inconvenient, inflexible and cost-effective. For example, if the theme or content of an art exhibition in a museum changes, printed material, such as a printed tourist guide or such as a above-mentioned leaflet depicting location and number of such objects, has to be created and produced, as well as sold. Due to the production process and the production result of this printed material, the publication of such is time consuming, expensive and once printed, changes regarding the given information in the printed material are almost impossible to carry out, thus showing the inflexibility of such an approach.

In more recent times systems for tourist guiding, including both navigation and narration, utilizing mobile computing and communication devices have been described. However, such systems usually require intelligent mobile devices (such as smart cellular phones or handheld computers) and the used information transfer protocol is based on internet connections over GSM or over any other mobile network.

In view of the above mentioned problems and disadvantages of the prior art it is an object of the present invention to provide a cheap database management system for storing and retrieving units of data which is connected to a mobile network and coupled with another database management system for ordering and charging purposes for guiding customers or visitors, respectively, through or at different sites and providing them with information of interest regarding these sites or regarding at these sites exposed objects, by using their own mobile phones as information devices for transmitting previously ordered units of information related to these sites or objects upon request of the customers.

This object is obtained by a system and a method according to independent claims 1 and 10, respectively. Further preferred and advantageous embodiments are subject of the dependent claims.

Preferably, a database management system according to the invention comprises a first database server for storing and retrieving units of data and a second database server for controlling said first database server, both database servers being connected to each other by network means, wherein said first database server is connected to a mobile network and further controlled via said mobile network by mobile devices of mobile network customers and it transmits via said mobile network upon request by said customers the said units of data to said mobile devices of said customers, and wherein the data units stored in the first database server are organized in voice guides boxes residing in the database server.

Such a system has the advantage that it can be implemented easily and in a cost effective matter. In particular, the organization of the data units stored in the first database server in voice guides boxes has the advantage that such voice guides boxes can be easily exchanged. Further, the system can be easily adapted to any in past, presence and future invented, constructed and/or built communication system, such as existing mobile communication networks, like GSM, or upcoming 3^{rd} Generation (3G) mobile communication networks.

Such a system according to the invention is not only capable of providing audio information. The provided information may consist of audio, video, pictures, text or any other type of information or transmission of information or a combination of some or all of these. A further advantage of the invention is that it works by using simple mobile devices and transmits in the preferred embodiment the units of information over a general mobile network without using an internet protocol.

The above and other objects, features and other advantages of the present invention will be more clearly understood from the following detailed description taken in conjunction with the accompanying drawings, in which:
- Fig. 1: is a schematic view of a preferred embodiment of the system according to the invention;
- Fig. 2: is a schematic view of another preferred embodiment of the system according to the invention with a geographically dispersed voice guides server;
- Fig. 3: is an example of a leaflet to support the present invention;
- Fig. 4: is a view of the structure of the Acquired Services file according to the invention;
- Fig. 5: is a view of the structure of the Ongoing Calls file according to the invention;
- Fig. 6: is a schematic view of the relation between the file of Acquired Services and the Ongoing Calls file according to the invention;
- Fig. 7: is a view of the structure of the Voice Guides Boxes file according to the invention;
- Fig. 8: is a view of the structure of the Officials file according to the invention;
- Fig. 9: is a view of the structure of the Services file according to the invention;
- Fig. 10: is a view of the structure of the Established Calls file according to the invention;
- Fig. 11: is a schematic view of the relation between the file of Services and the Established Calls file according to the invention;
- Fig. 12: is a view of the structure of the E-mail Addresses file according to the invention;
- Fig. 13: is a view of the structure of the Mistaken Calls file according to the invention;
- Fig. 14: is a block diagram of the architecture of the Voice Guides Server.

In the following preferred embodiments of the present invention will be described in detail with reference to the annexed drawings. In the drawings, the same or similar elements are denoted by the same reference numerals even though they are depicted in different drawings. A system constructed according with the present invention is called in the description of the preferred embodiments a Mobile Guide Service system.

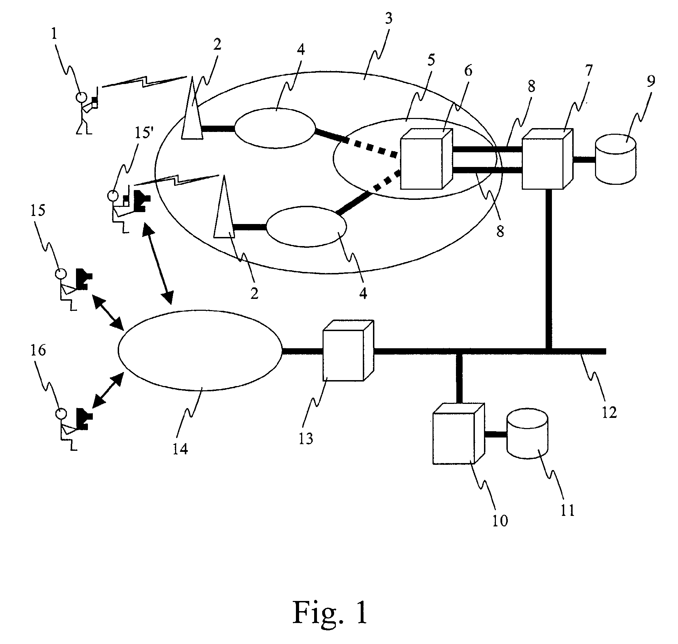

Fig. 1 shows a schematic view of a first preferred embodiment of the system according to the invention comprising subsystems and services that make up the infrastructure supporting the present invention. The main subsystem services intervening in the Mobile Guide Service according to the first preferred embodiment of the invention are a communication network 3, comprising mobile communication networks 4 and a fixed communication network 5, a first database server 7, a second database server 10 and Internet 14. The voice guides, i.e. the data containing the information required by a visitor are researched, prepared and recorded in advance.

Customers or visitors 1, 15, 15' are in contact with a public telephone switch 6 (PTS) via different base stations 2 and different cellular or mobile communication networks 4 of different providers. The mobile communication networks 4 are connected via the public telephone switch 6 of the fixed communication network 5 by an appropriate connection means 8 to a database server 7 (called Voice Guides Server - VGS) providing a database management system for storing and retrieving units of data stored on a storage subsystem 9.

It is one of the advantages of the invention that visitors of tourist sites can use all cellular networks 4 existing in the respective country, of GSM or other types, to access the Mobile Guide Service. Although in Fig. 1 only one PTS 6 is shown, the PTS 6 can consist of multiple switches geographically dispersed, and there can exist a plurality of fixed communication networks 5 and a plurality of mobile communication networks 4 or communication networks which are providing all types of communication, for example fixed and mobile. Each PTS 6 can be part of a fixed communication network 5 and/or a mobile communication network 4. The VGS 7 can be connected to public telephone switches PTS 6 in all of the fixed communication networks 5 and/or the mobile communication networks 4 or to a single PTS 6 or multiple PTSs 6 in one of the communication networks, as the fixed communication networks 5 and/or the mobile communication networks 4 will be interconnected with each other as parts of the communication network 3. The architecture of the solution to be adopted depends mainly on the interconnection costs.

All current types of mobile phones are, therefore, suitable to access the Mobile Guide Service.

In the first preferred embodiment the VGS 7 and the PTS 6 are connected by means of a number of E1 links (e.g. 2 Mbit/s, 30 simultaneous vocal channels) 8 to allow simultaneous telephone connections between the VGS and the customers of the service.

Further, in the first preferred embodiment the VGS 7 stores and retrieves units of information consisting of digitally encoded audio data. For example, it shall be assumed that at each site, in average, 30 objects are located. Therefore, to meet the customers' requirements for explanation of these objects each site contributes with 30 texts for explanation per idiom proposed, thus one text for each object, which will be digitally stored in the VGS 7 as audio data. The units of audio data are also called voice guides files. This set of voice guides files (corresponding to one idiom and one site), together with voice prompts and the set of recognizable voice and dial tone commands available to the customer to retrieve voice guides files of his choice is also called Voice Guides Box (VGB).

The storage subsystem 9 can be provided by means of any appropriate storage device which is sufficiently fast and preferably of a random access type, for example a hard disk (HD), compact disc (CD-ROM), magneto optical device (MO), memory device (RAM, ROM, EPROM, EEPROM, Flash ROM, etc.).

Preferably, the VGBs are classified read only for the customer, but can be modified by the provider of the system or its officials. Other data stored in the VGS 7 will be described in detail later.

Furthermore, in the first preferred embodiment, the VGS 7 is connected over a Local Area Network 12 (LAN) to second database server 10 (DS) which is connected to a storage subsystem 11 and provides a database management system for ordering, purchasing, billing, charging and/or statistical purposes. Of course, the VGS 7 and the DS 10 can instead be connected by any other appropriate means, for example by a Virtual LAN over the Internet 14. If the VGS 7 is installed close to the PTS 6 then the connection to the DS 10 can be made through a Virtual LAN via the Internet 14, for example. However, in principle the VGS 7 shall be connected to the same LAN 12 as the DS 10, as one assumes that the two systems will be physically close to each other. Further data stored in the DS 10 will be described later in detail.

Further, in the first preferred embodiment, the VGS 7 and the DS 10 are also connected to the Internet 14 over the LAN 12 via a TCP/IP router 13 for providing customers 15, 15' and/or officials 16 access. Of course, the DS 10 can instead be connected by any other appropriate means to provide customers 15, 15' and/or officials 16 access. Customers 1, 15, 15' and officials 16 may also access the services provided by the DS 10 over any other connection means, for example, also over a mobile network 4. Officials 16 are not only operators at an operators' location, such as an administration center, but can also be employees and/or selling agents at any site or location of interest, respectively.

As already described above, the VGS 7 and the DS 10 can be connected to each other by means of a Virtual LAN. Therefore, to provide such a system, the TCP/IP router 13 must consist of multiple routers connected to the Internet 14 and connected to different LANs 12, to which a VGS 7 is connected to a first LAN 12 and a DS 10 is connected to a second LAN 12, for example.

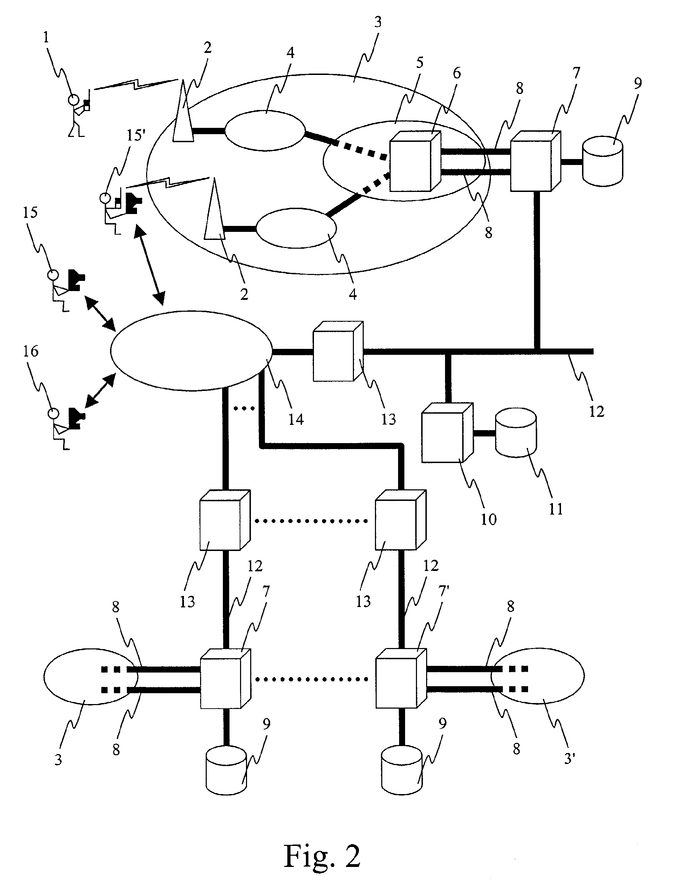

Fig. 2 shows a schematic view of a second preferred embodiment of the system according to the invention comprising subsystems and services that make up the infrastructure supporting preferably the present invention. The main subsystem services intervening in the Mobile Guide Service according to the second preferred embodiment of the invention were already denoted above in the description of Fig.1. Therefore, only further details which are not depicted in Fig. 1 and differences to Fig. 1 will be described thereafter.

In the first preferred embodiment according to Fig. 1 only one VGS 7 and only one DS 10 are shown. However, each of these, the VGS 7 and the DS 10, can consist of multiple servers geographically dispersed, each of these multiple servers being connected to each other by virtual connections via appropriate connection means, e.g. LAN, Virtual LAN and others, and providing a single virtual machine for managing the stored data 9, 11.

Therefore, the second preferred embodiment according to Fig. 2 relates to physical VGSs 7, 7' as a plurality of servers, thus a plurality of physical platforms, geographically dispersed and being connected to each other by means of a virtual LAN over the Internet 14 via a plurality of TCP/IP routers 13, which will now be explained in detail.

Each of the physical platforms 7, 7' geographically dispersed may serve only the limited number of sites in the region it is installed. All of them, nevertheless, are managed centrally and are connected seamlessly to the DS 10 as if it were a single virtual machine, thus a single virtual VGS.

In Fig. 2 this is shown by a plurality of VGSs 7, 7', each of these connected to a single TCP/IP router 13 over a LAN 12. Each of the VGSs 7, 7' is also connected to a local storage subsystem 9. The VGSs 7 are connected to the same communication network 3 over an appropriate connection means 8, whereas the VGS 7' is connected to an other communication network 3'.

Although, in the preferred embodiments according to Fig. 1 and Fig. 2 the communication network 3 is preferably a telephone communication network any other communication network 3' might be suitable, too.

The communication networks 3 and 3' can both comprise fixed communication networks 5 and/or mobile communication networks 4.

To fully understand the function of the preferred embodiments of the present invention, the flow of operation shall now be briefly explained. The customer 1 is preferably a visitor of a site carrying his mobile device with him, whereas 15 and 15' designate preferably customers at a terminal which may be located at home, but also can be located somewhere else, for example. While the customer 1 is connected to the service only via his mobile device and the customer 15 is connected to the service only via the Internet 14, the customer 15' is connected to the service via both possibilities. In general, the customer 15' does not have to use his mobile device for being connected to the service. He can instead use a fixed communication device, such as a simple DTMF (Dual Tone Multi Frequency) telephone, for example, connected to a fixed communication network 5 for being connected to the service.

In the following description only the one term "customer" will be used for all types of customers 1, 15, 15' mentioned above, as well as the one term "official" will be used for all types of officials 16 mentioned above. Further, if the term "mobile" is used (in "mobile device" or "mobile telephone number", for example), an optional replacement with the term "fixed" (such as in "fixed device" or "fixed telephone number", for example), is implied, where appropriate and/or reasonable.

At first, the customer 1, 15, 15' orders the service at a counter over the Internet 14 or via his own mobile device. While the customer 15 orders the service at a counter over the internet, the customer 1 can order the service via his own mobile device and the customer 15' has both possibilities for ordering. Ordering the service means being registered at the service. For example, counters with officials 16 are located at different sites. The complete ordering process is controlled by the DS 10, which also stores information about any ordering action. Then, in the preferred embodiments paying for the orders is done by cash or credit card. For example, the customer 1 may pay cash to an official 16 of a Mobile Guide Service counter or the customers 1, 15, 15' may pay per credit card via the Internet 14 or the mobile network 4.

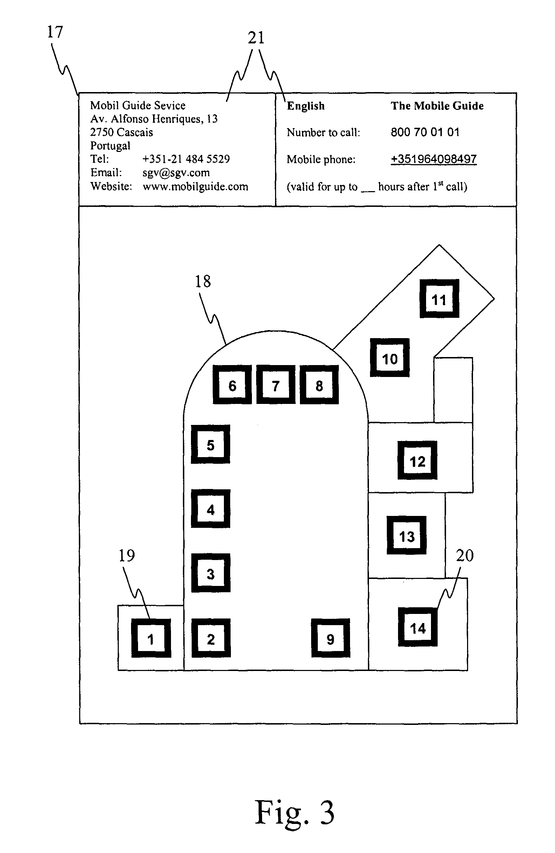

The customer 1, 15, 15' receives after paying for the service a leaflet, an example of which is shown in Fig. 3, on which all the needed information for using the service is printed on. The leaflet 17 shows a map 18 of a site, an object located at a guided tour starting point with its corresponding reference 19 and an object located at a guided tour ending point with its corresponding reference 20. Further, special information 21 for initializing and using the Mobile Guide Service is provided on the leaflet 17. After initializing the customer 1 can then listen with or without a headset connected to the mobile device to a voice explaining the corresponding objects. In the preferred embodiments the voice is transmitted as an audio data stream over the GSM mobile network to the mobile device which can be, for example, a cellular phone according to GSM standard.

In case, the customer 1, 15, 15' has ordered and paid the service at a counter the leaflet is printed by the official 16 running the counter, whereas if he ordered and paid over the Internet 14 or his mobile device the leaflet 17 is sent to the customer 1, 15, 15' via e-mail, thus giving him the possibility to print it. In any case, the information processing for ordering, charging and paying of the service is performed by the DS 10. Then, the DS 10 exchanges some information with the VGS 7 in order to enable the previously ordered services for the customer 1, 15, 15'. In the preferred embodiments the time the service can be used is limited to a certain service time dependent on the previously charged and paid amount.

If the customer 1, 15, 15' now travels to a site he previously ordered a service for or surfs via the Internet 14 to a website related to the site he previously ordered a service for, he is able to initialize and use the previously ordered service, preferably by using his mobile device, by means of the information given on the leaflet 17. This means, that the customer 1, 15' makes a phone call to the VGS 7, then the VGS 7 checks the identity of the customer 1, 15', the customer 1, 15' initializes the previously ordered service and the previously ordered service time starts to run.

Within the bounds of this ordered service time, the customer 1, 15' is able to control the actions of the VGS 7 by issuing commands to this subsystem with his mobile device over the mobile communication network 4 to the VGS 7, which then performs the desired actions. In the preferred embodiment the VGS 7 is able to perform different types of actions, such as switching from help mode to playing mode and vice versa, playing back the different voice guides files (related with objects located at the site) of a voice guides box (related with the site or the website of the site and to a certain idiom) and performing and receiving different commands related with this functionality. Some of the different commands the customer 1, 15' can issue to the VGS 7 are, for example, commands for choosing an appropriate voice guide to be transmitted, jumping to the beginning or the end of the current transmitted voice guide, jumping back or forward several seconds within the current voice guide and stopping, interrupting or restarting the transmission of the current voice guide. On interruption of the transmitting of the current voice guide the customer 1, 15' can decide by issuing the appropriate command, if he wants the VGS 7 to enter help mode or playing mode, provide help or indicate the remaining time the service is ordered for.

After the ordered service time has run out and an appropriate message has been transmitted to the customer 1, 15', the VGS 7 disconnects from the customer. If the customer 1, 15' then calls the VGS 7 again, the VGS 7 will deny any further service, transmit an appropriate message and hang up again.

For a better understanding of the present invention, the preferred data structures which are used by the voice guides server VGS 7 and database server DS 10 will now be described. The data fields of these data structures are referenced by denoting them with the letter "f" followed by a number of the format "[X.Y]", where X is the number of the data structure and Y is the number of the data field within this structure. If there is special explanation needed related with the data field, the explanation is given after the description of the figure in general.

The Voice Guide Server VGS 7 is similar to a voice mail system as used, for example, by fixed and mobile network operators. Its functions are, however, different. As in a conventional voice mail system, the audio information stored in the Voice Guides Server VGS 7 is organized in Voice Guides Boxes residing in the storage subsystem 9 of the server (like mailboxes in a voice mail system). However, and contrary to systems in which each customer has a personal mailbox with a predetermined storage capacity where voice messages are stored by himself or by his correspondents in order to be read later, forwarded to other mailboxes or simply deleted in a totally dynamic way ("Read/Write spaces"), in the Voice Guides Server VGS 7 the voice guides stored in the Voice Guides Boxes are fixed and the customer 1, 15', aided by voice prompts emanated from the VGS 7 over the mobile network to his mobile terminal, can only read (play) them by issuing appropriate voice or dial tone commands via his mobile terminal over the mobile network 4 to the VGS 7. No other operation of a different nature is allowed ("Read Only spaces"). In each Voice Guides Box are stored all voice guides referring to a specific site and in a specific idiom. Thus, to one site there will, for example, correspond always five Voice Guides Boxes, one for each of the working idioms: Portuguese, English, German, Spanish and French. Of course, any other number or combination of idioms could be imagined.

The texts corresponding to the voice guides of a site are produced by experts appointed by the administration of the site - museums, monuments, historical centers -, translated into the working idioms selected for the site, recorded in a recording studio and formatted into files residing in a CD-ROM or in a hard disk of a PC.

The process of storing the information in the VGS 7 ("uploading") is not specified here. A management system, which manages the VGS 7, might have a relevant role in it, either reading the voice guides directly from a CD-ROM, or extracting them directly from the hard disk of the formatting PC.

For short-term exhibitions, an alternative to recording in studio the respective voice guides would be, for example, to load the corresponding texts in the VGS 7, in the working idioms, and submit them directly to in-built text-to-speech software in the VGS 7. The text-to-speech software in the VGS 7 could also be used to produce the voice prompts and help messages mentioned above.

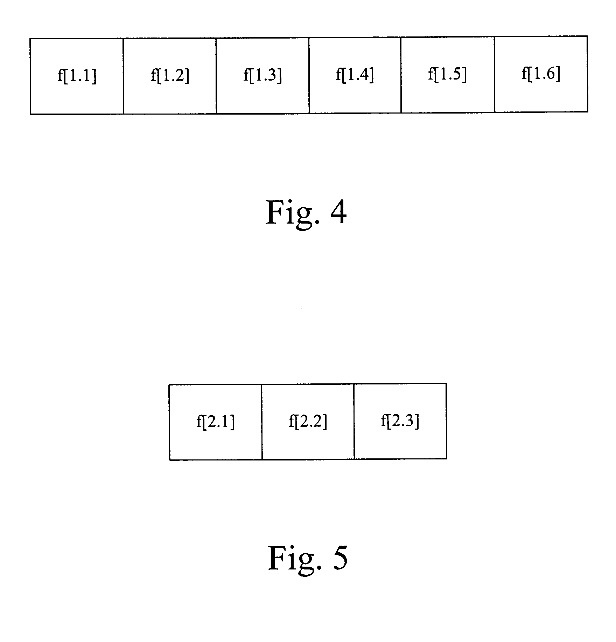

Once a customer acquires a service, the VGS 7 receives from the DS 10 a register with the following fields: "customer's telephone number", "site object of the visit", "selected idiom", "duration of the service". With the site and idiom selected, the VGS 7 identifies which of its Voice Guides Box should serve this customer and adds a register to the so-called Acquired Services file. Fig. 4 depicts the structure of the Acquired Services file (data structure 1) stored in the VGS 7 with six data fields. This file is a simple sequential file and the repository of the ordered and acquired services still to be rendered or already being rendered. The data fields of this data structure indicate:
f[1.1] customer's phone number
f[1.2] Voice Guides Box
f[1.3] duration of service
f[1.4] status of service
f[1.5] date and time the service starts being rendered
f[1.6] clear this register

f[1.2] stores information identifying the VGB corresponding to a specific site and a specific idiom by storing in this data field the phone number of access to the service, which the VGS 7 associates to a specific VGB. As already explained, a Voice Guides Box corresponds to a specific site and a specific idiom and to access it, the customer 1, 15' shall have to dial a specific telephone number. Most probably it will be a so-called "green number" (800 nnn nnn) since the customer 1, 15' should not be charged for the call he will have to establish in order to access the service. The field "Voice Guides Box" thus contains a telephone number of access to the service, which the VGS 7 associates to a specific Voice Guides Box.

f[1.3] stores a value for a time the service should be provided. This is also necessary, for different pricing schemes indexed to the time the service is to remain available to the customer 1, 15'. The time found reasonably necessary for an audio-guided visit shall depend, naturally, on the nature of the site. Moreover, the Mobile Guide Service provider may decide for a pricing scheme indexed to the time the service is to remain available to the customer 1, 15'. It is necessary, therefore, that there exists a field in the Acquired Services file where to store this parameter, so that the system can verify, periodically, if the contracted time for the service availability has already expired, or not.

f[1.4] indicates the status of the service which can be "still to be rendered", "being rendered", "already rendered" or "inactive". Upon the creation of a register, this data field is set in the state "still to be rendered". The first time the customer or visitor 1, 15' accesses the service, the state of this data field is changed to "being rendered" and the data field f[1.5] is filled with the appropriate value. Simultaneously a block of registers in the Ongoing Calls file (explained below with respect to Fig. 5) is initiated. When field f[1.6] is set to a logical "1", it means that the service was fully rendered (register already in the "inactive" condition) and that the corresponding registers in the Ongoing Calls file were already transferred to the DS 10. Thus, the current register and the corresponding ones in the Ongoing Calls file can be cleared.

Fig. 5 depicts the structure of the Ongoing Calls file (data structure 2) stored in the VGS 7 with three data fields. This file stores the starting and finishing hours of the various calls the customer 1, 15' establishes from his mobile device. The data fields of this data structure indicate:
f[2.1] network used
f[2.2] date and time the call was initiated
f[2.3] date and time the call was terminated

f[2.1] stores a value which indicates the used mobile network 4 for each call. A block of registers in this file gathers the starting and finishing hours of the various calls the customer 1 establishes from his mobile phone while roaming around the place, using, indifferently, the various available networks, depending on the coverage, better or worse, each one offers at any instance.

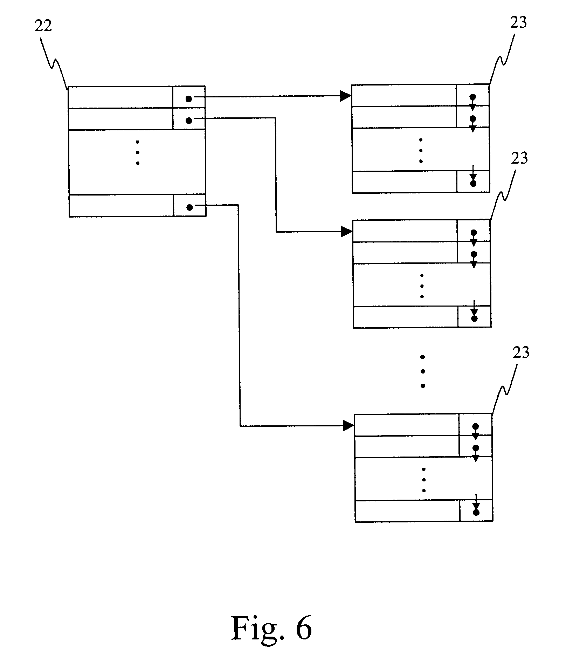

Each register of the Acquired Services file signaled as the respective service "being rendered" points then to one of these blocks and this set of files has all data necessary to the management of the Mobile Guide Service and to the sharing of revenue among its partners. Fig. 6 depicts a schematic view of the relation between the file of Acquired Services 22 and the file of Ongoing Calls. The Acquired Services file 22 relates to a plurality of blocks 23 of the Ongoing Calls file, with each register in the Acquired Services file 22 relating to a single block 23 of contiguous registers in the Ongoing Calls file.

It follows a description of the tasks to be executed by the VGS 7. These are, namely, the service authorization, the checking of the time the service is being rendered, the dialog with the customer or visitor 1, 15', the terminus of the service and, finally, the sweeping of the files. When a customer or visitor 1, 15' accesses the service through his mobile phone, the system checks the registers of the Acquired Services file in search of one in which the number of the customer's mobile phone is referenced. There are then four possibilities:
a) There is no such register: the service is rejected. The VGS 7 sends a message back to the customer's mobile phone and the call, which will be charged at the usual rates, is terminated.
b) There is a register corresponding to the customer's mobile phone but not to the site he requested access to: the service is rejected. The VGS 7 sends a message back to the customer's mobile phone and the call, which will be charged at the usual rates, is terminated.
c) There is a register corresponding to the customer's mobile phone and the site he accessed, but he is not in the correct site: the mobile network realizes that the customer 1 is not located at the cell corresponding to the site he wants to visit and the service is rejected. The VGS 7 sends a message back to the customer's mobile phone and the call, which will be charged at the usual rates, is terminated. This register is optional.
d) There is a register corresponding to the customer's mobile phone and the site he accessed, and the customer 1 is located in the correct site: then, the field "status of service" is verified. Then, again, four situations are possible:
   d1) The field "status of service" is in the condition "still to be rendered": this means that the customer 1, 15' is accessing the service for the first time. The field "status of service" changes to "being rendered", the field "date and time the service starts being rendered" is filled in accordingly and the dialog of the corresponding Voice Guides Box with the customer 1, 15' is initiated. Simultaneously, a new block of registers in the Ongoing Calls file is initiated. When the communication comes to an end, the field "date and time the call was terminated" in the first register of the block just created is filled in with the current date and time.
   d2) The field "status of service" is in the condition "being rendered": one extra register is added to the corresponding block of registers in the Ongoing Calls file and the dialog of the current Voice Guides Box with the customer 1, 15' is reestablished. Again, when the communication comes to an end, the field "date and time the call was terminated" in this register is filled in with the current date and time.
   d3) The field "status of service" is in the condition "already rendered": the service is rejected. The field "status of service" is changed to "inactive" and the Voice Guides Box sends back an appropriate message to the customer's mobile phone.
   d4) The field "status of service" is in the condition "inactive": the service is rejected and the VGS 7 sends a message back to the customer's mobile phone and the call, that will be charged at the usual rates, is terminated.

The situation described above will be the more common. It can happen, however, that the customer 1, 15, 15' acquires more than one service for the same site and in the same idiom, thus creating similar registers in the Acquired Services file. In order to avoid inconsistencies and the lack of co-ordination such a situation could bring about, whenever a specific service is accessed by a customer 1, 15, 15' and the corresponding register exists in the Acquired services file, the system will always check whether registers with the same entries also exist. If registers with the same entries exist, as only one of these can be active at anytime, the field "status of service" of these similar registers is checked and only the one that is on the "being rendered" condition is considered, no any other one being processed until it reaches the situation "already rendered". If registers with the same entries exist, but none is in the "being rendered" condition, then the VGS 7 searches for one in the "still to be rendered" condition. If it finds it, it is selected, changed to the condition "being rendered", any register in the "already rendered" condition passes to "inactive", a warning message is sent back to the customer's mobile phone and the new service is initiated. Else, there must be only one register in the "already rendered" condition, all the others are (should be) "inactive" and the service is rejected (as in paragraph d3) above). Its field "status of service" is changed to "inactive" and the Voice Guides Box sends back an appropriate message to the customer's mobile phone.

A process running in the background checks periodically whether the contracted time of those services "being rendered" has run out or not. To this effect, it goes through the registers of the Acquired Services file comparing the date and time the service started being rendered with the current date and time. If the time interval between them is greater to what is in the field "duration of service", the field "status of service" is put in the condition of "already rendered" and, from then onwards, new requests originating from the customer will be dealt accordingly, as we have seen before.

Once a service is authorized, the corresponding Voice Guides Box - site and id-iom - enters in the playing mode and a dialogue is established between the customer 1, 15' and the box: the customer 1, 15' sends commands to the box and the box answers with Voice Guides or some other appropriate vocal messages (error messages, for example). Commands issued by the customer 1, 15' can either be keystrokes in his mobile or voice commands. In order to accept voice commands, the VGS 7 should have an in-built voice recognition engine (numbers and simple words, such as, "end", "beginning", "stop", "go", etc...). Voice Guides and vocal messages of error, warning or help will be issued in the idiom of the selected Voice Guides Box. Also the voice commands, in order to be recognized, must be spoken in the idiom of the selected box. The keystroke commands will be the same for all boxes, independently of its idiom. If, at any time, a command issued by the customer 1, 15' is detected, the Voice Guides Box serving him interrupts immediately any Voice Guide or vocal message it might be playing and, within two seconds maximum, starts the execution of the selected command. If the system is not in playing mode, the absence of commands for more than five seconds will result in the activation of the help mode appropriate to the context the service is in.

While in playing mode, there is a task running in the background, which monitors the field "status of service" in the current register of the Acquired Services file. If the field "status of service" is in the condition "being rendered", the system will go on playing the current voice guide and to react to commands as described above. If the field "status of service" is in the condition "already rendered", the system will go on playing the current message but, except for a small audible "bip", pressing any of the special function keys or the issuing of voice commands, will not produce any effect whatsoever. Thus, once the current voice guide comes to an end, the box plays a message indicating that the contracted time has run out and finishes with a farewell phrase, upon which the call is disconnected and the current date and time are written in the current register of the Ongoing Calls file.

Registers of the Acquired Services file in the condition of "inactive" and the correspondent blocks in the Ongoing Calls file are no longer needed to the VGS 7 and should be cleared in order to free disk space for further services. However, before this clearance takes place its condition must be copied into the corresponding register of the Services file at the DS 10 and the corresponding block of registers of the Ongoing Calls file must be copied into the Established Calls file at the DS 10 and associated with the respective register in the Services file. Only then and as a result, the field "clear this register" in the Acquired Services file is set to a logical "1". A polling mechanism checks permanently the Acquired Services file looking for registers in the condition of being cleared. Whenever one is found, the register itself and the corresponding block of registers in the Ongoing Calls are cleared in the VGS 7.

The access to the database of the Mobile Guide Service by the Service Provider, its partners (Museum Authorities and Mobile Network Operators) and the public in general, in order to acquire services, to check the status of a particular service or to extract management or statistical information, is done via Internet applications implemented in the DS 10. In the preferred embodiment the DS 10 is either a PC or a Unix workstation fitted with enough memory and disk space to be the repository of data concerning all acquired services, be they in the condition of "still to be rendered", "being rendered" or already rendered". It has a Web enabled database engine (ORACLE or similar). The interfaces with other systems, the data structures it will hold and the tasks and user applications it will have to run are now described.

In principle, the DS 10 is connected to the same LAN 12 as the VGS 7, as one assumes that the two systems are physically close to each other. In case it is more convenient to install the VGS 7 near to the PTS 6 it is connected to, then the connection with the DS 10 might be done through a virtual LAN via the Internet 14, as already mentioned. Some tasks running in the DS 10 will interact with others in the VGS 7 in order to collect information on services already rendered, for management and statistical purposes. The DS 10 will also connect to the Internet 14 through a TCP/IP router 13, as the Mobile Guide Service provider, its partners (site authorities and mobile network operators) and the public in general, access the service through the Internet 14 to acquire tours, extract information, etc., as explained afterwards. In the following the structure and contents of the files - Voice Guides Box, Officials, Services, E-mail addresses and Mistaken Calls - is described that, altogether, contain all the basic data needed to run the Mobile Guide Service.

For each given country there will be several sites included in the Mobile Guide Service and for each site only a limited number of working idioms are considered (possibly, only five - English, German, Spanish, Portuguese or French and the local idiom). For each idiom considered there will be a Voice Guides Box in the VGS 7 that can be accessed by dialing a specific telephone number. The price per hour of access to the service shall depend on the site.

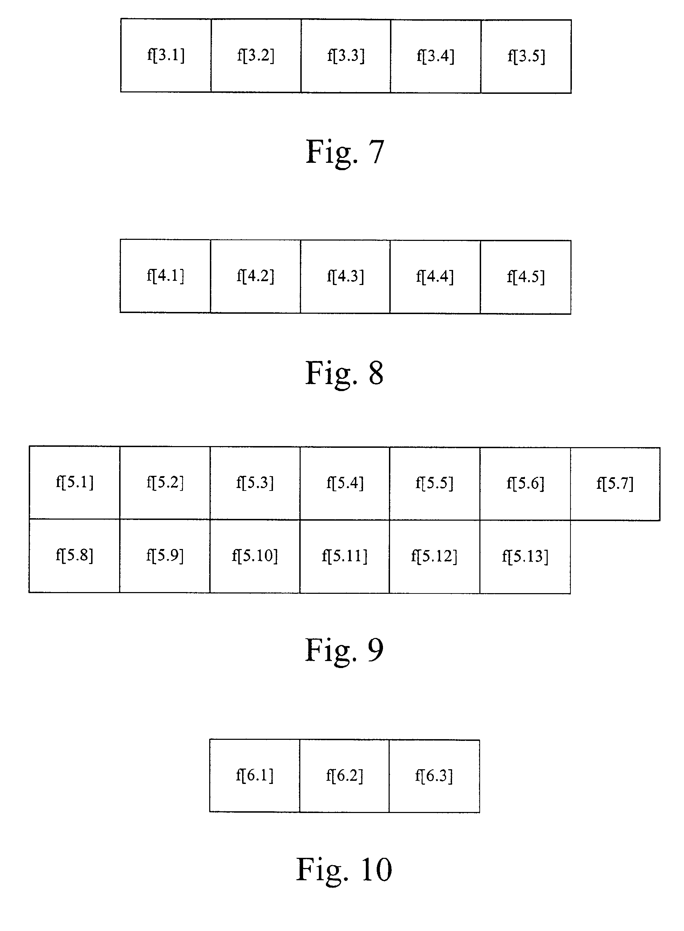

Fig. 7 depicts the structure of the Voice Guides Boxes file (data structure 3) stored in the DS with five data fields. This file stores the sites available for the service and the working idioms of VGBs at each site. The data fields of this data structure indicate:
f[3.1] country
f[3.2] site
f[3.3] working idiom
f[3.4] Voice Guides Box access number
f[3.5] Price per hour of access time

f[3.4] stores the specific phone number of access to the service in relation to the working idiom or language of the VGB. f[3.5] stores the price per hour of access time for the site.

For each given country there will be several sites included in the Mobile Guide Service and the available pool of officials 16 (selling agents or clerks at a Mobile Guide Service counter at the sites) will be in charge of selling services to the customers 1, 15, 15' and perform some ancillary tasks as well. Other officials 16 belonging to the administration of the sites, to the network operators supporting the service and to the Mobile Guide Service provider itself will need to access the DS 10 in a secure way, in order to extract reports pertaining to their organizations and their jobs. Fig. 8 depicts a structure of the Officials file (data structure 4) stored in the DS with five data fields. This file stores information about the officials 16 of the system for authentication purposes. Officials 16 may be administrators, selling agents allocated to a site and any person who needs operational access to the system. Access rights state which operations within the system the official 16 is authorized to realize. The data fields of this data structure indicate:
f[4.1] country
f[4.2] username of the official
f[4.3] password of the official
f[4.4] site or organization
f[4.5] access rights

Whenever a customer 1, 1, 15' acquires a service, either from the official 16 of a Mobile Guide Service counter or through the Internet, a register is created in the Services file. Fig. 9 depicts the structure of the Services file (data structure 5) stored in the DS 10 with 13 data fields. This file stores the ordered services for each customer. The data fields of this data structure indicate:
f[5.1] customer's phone number
f[5.2] roaming or surfing
f[5.3] customer's country
f[5.4] site
f[5.5] working idiom
f[5.6] Voice Guides Box
f[5.7] duration of the service
f[5.8] username of the official (selling agent) or credit card
f[5.9] selling date and time
f[5.10] revenue collected
f[5.11] customer's e-mail address
f[5.12] status of the service
f[5.13] date and time the service started being rendered

Most of these fields are already known. The fields "roaming or surfing", "customer's country", "username of the official (selling agent) or credit card", "revenue collected" and "customer's e-mail address" will be explained further. f[5.2] stores a value indicative of the customer 1, 15, 15' roaming around a site using his mobile device or being at a terminal surfing a website of a specific site. This data field enables the system to offer slightly different services dependent on the physical place of the customer 1, 15, 15'. This is the field that the Mobile Guide Service looks first into before a specific service comes to be rendered. f[5.3] stores the country code of the customer 1, 15, 15'. f[5.8] stores the selling information which relates with the way the customer 1, 15, 15' paid for the service. Either the identification number of the official 16 or the credit card number of the customer 1, 15, 15' or similar information may be stored. A service can be acquired directly at a Mobile Guide Service counter, in which case, the code of a properly identified official 16 (he will have a password to access the DS 10 and sell a service) will be written in this field, or else, the customer 1, 15, 15' may buy the service through the Internet 14 and, in this case, this field will have an identification of his credit card or similar form of payment. f[5.10] stores the collected revenue obtained from selling the service, either through an official 16 at a Mobile Guide Service counter or through the Internet 14. It is dependent on the site and the length of time (duration) the service was ordered for. Also, if the service is used to complement a visit to the web site of a Museum, Monument or Historical center, the calls established with the service will be value added calls and this field will have the revenue owed to the Mobile Guide Service by the telephone operator which terminates these calls (probably a fixed network operator).f[5.11] stores optional the customer's e-mail address. This is the e-mail address the system should send documentation related to the acquisition of services directly by the customer 1, 15, 15', through the Internet 14. This is an optional field; the customer 1, 15, 15' may not wish to provide this information.

Fig. 10 depicts the structure of the Established Calls file (data structure 6) stored in the DS 10 with three data fields. Similar in structure to the Ongoing Calls file, this file stores the starting and finishing hours of the various calls the customer 1, 15' established from his mobile device. The data fields of this data structure indicate:
f[6.1] network used
f[6.2] date and time the call was initiated
f[6.3] date and time the call was terminated

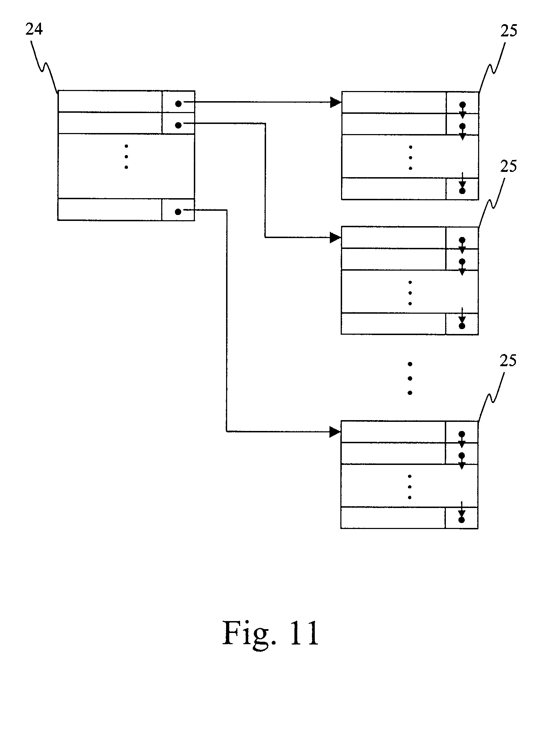

f[6.1] stores a value which indicates the used mobile network 4 for each call. The file is made of blocks of registers from the Ongoing Calls file in the VGS 7, corresponding to services fully rendered that are copied as a whole. A block of registers in this file gathers the starting and finishing hours of the various calls the customer 1 established from his mobile phone while roaming around the place, using, indifferently, the various available networks, depending on the coverage, better or worse, each one offers at any instance. Thus, each register of the Services file signaled as the respective service being already "inactive" points, then, to one of these blocks (Figure 11) and this set of files has all data necessary to the management of the Mobile Guide Service and to the sharing of revenue among its partners.

Fig. 11 depicts a schematic view of the relation between the file of Services and the file of Established Calls. The Services file 24 relates to a plurality of blocks 25 of the Established Calls file, with each register in the Services file 24 relating to a single block 25 of contiguous registers in the Established Calls file.

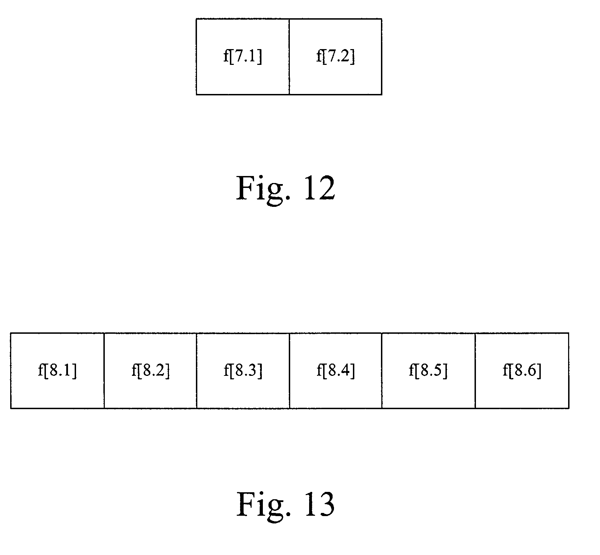

Fig. 12 depicts the structure of the E-mail Addresses file (data structure 7) stored in the DS with two data fields. This file stores the e-mail addresses of the customers 1, 15, 15' and a correspondingly generated password. As above mentioned the customer 1, 15, 15' does not have to specify an e-mail address, because the e-mail address is optional information. The data fields of this data structure indicate:
f[7.1] e-mail address of the customer
f[7.2] password of the customer

Fig. 13 depicts the structure of the Mistaken Calls file (data structure 8) stored in the DS 10 with six data fields. This file stores the mistaken phone calls, which are phone calls of a customer 1, 15' to a service the customer 1, 15' is not registered for, and internal information regarding the reset of the service by intervention of an official 16. The data fields of this data structure indicate:
f[8.1] username of the official (selling agent)
f[8.2] customer's (mobile) phone number
f[8.3] Voice Guides Box
f[8.4] network used
f[8.5] date and time the call was initiated
f[8.6] date and time the call was terminated

The database engine implemented in the DS 10 has tasks running in background mode to produce automatically the management and statistical reports described further ahead and to communicate with the VGS 7. Whenever a customer 1, 15, 15' acquires a service and, therefore a register is created in the Services file at the DS 10, the DS 10 dialogues with the VGS 7 and passes over information about the customer's telephone number, the site object of the visit, the selected idiom and the duration of the service. A corresponding register is then created in the Acquired Services file in the VGS 7. As stated above, whenever there is a change of condition in the "status of service" field in the Acquired Services file, the new status is passed over to the corresponding register of the Services file in the DS 10 (in this way, it is possible to know, for instance, at any time, which customers 1, 15, 15' are using the service and where - their corresponding registers will all be in the condition of "being rendered").

Depending on the perceived status, the following will happen. If the new status is "being rendered", the DS 10 requests from the VGS 7 the date and time the service was initiated (the field "date and time the call was initiated" from the first register of the corresponding block in the Ongoing Calls file) and copies it into the field "date and time the service started being rendered" in the Services file at the DS 10. If the new status is "already rendered" then nothing is done. If the new status is "inactive", then the DS 10 requests from the VGS 7 the transmission of the corresponding block of registers from the Ongoing Calls file to the Established Calls file in the DS 10 and associates it to the corresponding register in the Services file. Once this transfer is done successfully, the DS 10 instructs the VGS 7 to set to a logical "1" the field "clear this register" in the corresponding register of the Acquired Services file.

The database engine implemented in the DS 10 must be Web enabled and capable of generating standard and ad-hoc reports in a friendly way. Preferably, there are two classes of Internet applications to be based on the DS 10: database administration applications and user applications. Database administration applications are database maintenance operations under the responsibility of the Database Administrator of the Mobile Guide Service provider. Every time a new official 16 becomes associated with the Mobile Guide Service, the Database Administrator creates a corresponding register in the Officials file, assigning a name, password and access rights as appropriate. The same goes for other officials 16 in the sites administration, mobile operators and the Mobile Guide Service provider itself, who need to have access to the database system in order to extract reports pertaining to their organizations and their roles in it. The first time the official 16 accesses the system, he will be asked to change this initially assigned password for one of his own, only to be known by him and nobody else, not even the Database Administrator. At any time he accesses the system, the official 16 will be able to change his password. For security reasons, no password can last more than a couple of months and the official 16 is requested to change it in case this limit is exceeded. An official 16 may, inadvertently, forget his password - the Database Administrator accesses the respective register and re-initializes the password. Again, on the first occasion the official 16 accesses the system with his re-initialized password, he is requested to change it for one of his own. Finally, officials 16 may move to a different site, operate in more than one site or leave this function altogether - the Database Administrator modifies or erases the corresponding register in the Officials file. For every new site coming into service, new registers are created in the Voice Guides Boxes file by the Database Administrator of the Mobile Guide Service provider, one for each working idiom for that site. Prices per hour of access time to the service are also set and maintained by the Database Administrator.

User applications are the applications supporting the work of the officials 16, the acquisition of services via the Internet 14 and the extraction of management and statistical reports by the Mobile Guide Service provider and its partners (Museums and Mobile Operators). The official 16 at a Mobile Guide Service counter is preferably equipped with a PC connected to the Internet 14 (for example, a permanent ADSL connection), a standard ink jet printer and a special purpose printer for issuing receipts. Basically, once authenticated vis-à-vis the system, the official 16 can access the Mobile Guide Service database in order to sell the service to a customer 1, 15, 15', to conduct a query on behalf of a customer 1, 15, 15', to resetting the service to a customer 1, 15, 15' and to list all services sold. Once the correct URL is accessed (this can be a simple link in the homepage of the Mobile Guide Service), a blank page appears requesting an identification of the site and the name and password of the official 16. The input is then compared with the Officials file and only if a corresponding register is found, with the correct access rights, is the official 16 presented with a new page where the four procedures above are listed as links. The official authentication procedure takes in consideration the access rights procedures stated above, namely the possibility of changing his password at any time, the obligation of changing any Database Administrator assigned password on the first occasion, the obligation of changing the password whenever more than a couple of months have elapsed since the last time this was done.

By clicking the "sell a service" link in the page presented after a correct authentication, theofficial 16 is presented a web page with the following fields to be filled (altogether they make up a service): site object of the visit (selected from a small window, fitted with a lift or equivalent mechanism, portraying all sites included in the service), customer's mobile phone number (including the country code), working idiom (selected again from a small window, fitted with a lift or equivalent mechanism, portraying all working idioms available for the site) and number of hours of access to the service. Depending on the number of hours the customer 1, 15, 15' wants to have access to the service and the price per hour for the site selected, the price of the service is calculated and displayed. Once the customer 1, 15, 15' gives the go-ahead and makes the payment due, the official 16 confirms the data on the page and a register is created in the Services file. Simultaneously, a receipt is printed in the special purpose printer and, in the general purpose printer, the telephone number the customer 1, 15, 15' should dial to access the service, the telephone number of the customer 1, 15, 15' (the only one that shall be recognized) and the working idiom shall all be printed in a leaflet 17 with the map 18 of the site, with instructions 21, in the working idiom, on how to use the service. Finally, the above information is automatically passed over to the VGS 7 and a new register is created in the Acquired Services file. A customer 1, 15, 15' may have acquired one or more services, may have already used some of them, does not have all the information with him and may like to have some consolidated information about the status of each of them. Any official 16 can help him. The only thing the official 16 needs is the number of his mobile phone. By moving into the page with the links to the four procedures mentioned above and clicking the "services query" link, the official 16 is presented a web page with a single field to be filled with the customer's mobile phone number. Once done, the system queries the Services file in search for registers starting with that phone number. For every register found, the system displays a line with the following information: selling date, customer's phone number, country where the site is located, site name, working idiom, duration of the service, amount paid, status of service, date the service was rendered (if that is, indeed, the case). This table can be printed and given to the customer 1, 15, 15'.

As the customer 1, 15, 15' may have acquired the Mobile Guide Service for more than one site, it may happen that, by mistake, he dials the service access number corresponding to a site different from the one he is in, thus starting, in an irreversible way, the counting of time of a visit which, truly, is not taking place. If this happens, the official 16 at the site can help. The only thing he needs is the number of the customer's mobile phone. By moving into the page with the links to the four procedures mentioned above and clicking on the "service resetting" link, the official 16 is presented a web page with one field to be filled with the customer's mobile phone number. Once that is done, the application checks for registers in the Services file corresponding to the customer's phone in the condition of "being rendered" (at any time, obviously, there should be not more than one). If yes, the system displays a line per such a register with the following information: selling date, country where the site is located, site name, working idiom, duration of the service, amount paid, status of service, date the service was rendered (if that is, indeed, the case). Each line will have a button which will allow the official 16 to reset the service to the condition of "still to be rendered" in the Services file. Naturally, he should do that only in those services that do not correspond to the current site.

Resetting of a register in the Services file will have immediate effect in the corresponding register of the Acquired Services file in the VGS 7. Its status shall be set to the condition of "still to be rendered" and the fields for the date and time the service had started being rendered are cleared. The corresponding registers in the Ongoing Calls file in the VGS 7 are also deleted but, before being deleted, they are transferred to the Mistaken Calls file at the DS 10, so they can be accounted for to the Mobile Operators. As the official 16 is responsible for the revenue collected, this application allows him to list all sales made through his direct intervention. Thus, by moving into the page with the links to the four procedures mentioned above and clicking on the "services sold" link, the official 16 is presented a web page with two fields to be filled with the beginning and end dates of the inquiry. Once these two limiting dates are entered, the system collects from the Services file all registers originated by the current official 16 and displays them in blocks, one per day. Each line of a block will have the following information: selling hour, customer's phone number, customer's country, site object of the visit, working idiom, duration of the service, status of service, revenue collected. The lines of a block will be sorted by the ascending selling hour. The total revenue collected each day is also calculated and displayed together with the block. The page can be printed and kept by the official 16 for accounts rendering purposes.

In alternative to acquiring the service directly at a Mobile Guide Service counter, the customer 1, 15, 15' can do it himself via the Internet 14. To do so, he should enter the main Web page of the Mobile Guide Service and select a country. Small pictures of all sites are then displayed and, by clicking at any of them, the details of the site are shown: a generic description, various pictures, a map of the site with the location of the objects for which there is a Voice Guide, an example of a Voice Guide (to be played via Real Audio or equivalent) and a link to a map with the location of the site and with instructions on how to reach it with a car or using public transports. If the customer 1, 15, 15' is interested in buying the Mobile Guide Service for that site he will click on a "buy the service" button and a sub-page will pop up requesting the mobile phone number of the customer 1, 15, 15', country code included, the working idiom and the number of service hours required. Once this data is confirmed, the application checks against an internal table whether the mobile operator embedded in the customer's telephone number exists in the country indicated and displays a compact list with the name of the customer's mobile phone operator and country of registry, the customer's mobile phone number, the working idiom, the number of service hours required and the price of the service. If this data is confirmed (click in the "Add to the Shopping Basket" button) a temporary internal register is created and the pop-up page is cleared. The customer 1, 15, 15' can then go back to the page of sites in the current country and select another site or go to another country and explore the sites there.

In all these pages there is a button to "Check the Shopping Basket". Once clicked, a "services selected" page will pop up. In it, the list of services selected so far, one per row, is displayed (country, site, customer's mobile phone, working idiom and price). Each line has a check box that permits the customer 1, 15, 15' to confirm that he really wants to acquire the service. There is also a "Buy" button. If the "Buy" button is clicked, the system gathers those services that were confirmed and produces a "services to be acquired" page. As usual in this type of e-Commerce, there are also fields for the customer 1, 15, 15' to fill with his name, street address, e-mail address (optional) and Credit Card number, followed by a table of the services to be acquired and the total price to be paid. The customer 1, 15, 15' is then asked to confirm this data. If yes, the transaction is initiated and, if successful, corresponding registers are created in the Services file at the DS 10. Also, buttons appear in front of each service line allowing the customer 1, 15, 15' to print immediately the guiding leaflet 17 for the site, in the selected idiom, or download it in a version, displayable by Acrobat Reader, for example (file in pdf format). There are also buttons that will print a receipt with the information in the "services to be acquired" page properly formatted, or request the download to the customer's PC of a corresponding pdf file. If the e-mail field was filled, the receipt (in pdf format), the guiding leaflets 17 and the map with the location of the site are all sent to the indicated address. A password will also be sent, to allow the customer 1, 15, 15' the access to its data within the Mobile Guide Service.

In alternative to acquiring the service directly at a Mobile Guide Service counter or through the Internet 14 at his PC, the customer 1, 15' can do it using his mobile phone, provided it is Web enabled. The Mobile Guide Service will have, then, a corresponding Web page suitable for the small screen of a mobile phone. When using a mobile phone, due to the smallness of its screen, services can only be acquired one at a time.

As explained above, whenever a customer 1, 15, 15' buys one or more services at a Mobile Guide Service counter or through the Internet 14 (via a PC or a mobile phone), he is asked to provide, optionally, an e-mail address to where documentation related with the service can be sent. As described above, to an e-mail address there will correspond always a unique password (sent by e-mail to the address indicated). With this combination of unique e-mail address/password, the customer 1, 15, 15' enters the Mobile Guide Service web site and clicks at the "Customer's Data" link. He is then asked to enter his e-mail address and corresponding password. The system then checks within the E-mail Addresses file for the existence of the e-mail address entered (if there is no such e-mail address an error message is produced) and the correctness of the password also entered. If a correct combination is found, the system searches for all registers in the Services file having the entered e-mail address in the appropriate field and displays a line with the following information: selling date, customer's mobile phone number, country where the site is located, site name, working idiom, duration of the service, amount paid, status of the service and date the service was rendered (if that was, indeed, the case). This table can then be printed.

Three types of entities will require up-to-date knowledge of the on going operational activities: the museums, monuments and historical sites, the mobile operators and the Mobile Guide Service provider itself. Reports will be generated automatically and sent by e-mail to pre-determined addresses. The administration of each museum and historical site included in the service will receive, daily, by e-mail, a map with a list of the services acquired in the current day. The following information is included, one per line: customer's mobile phone number, working idiom, duration of the service, amount received. The total amount received is also printed. In the same report there is a second part listing those services already rendered. The following information is included, one per line: selling date, customer's mobile phone number, working idiom, duration of the service and the collected revenue corresponding to the rendered service. The total amount corresponding to the rendered services is also printed. Some of the sites will have entities overseeing them all. In Portugal, for instance, all national museums are under the responsibility of the IPM (Portuguese Museums Institute). Such entities, beyond the above daily report, will also receive by e-mail a daily summary report on acquired and rendered services, for all sites under its jurisdiction. These reports contain statistical and financial data useful for the museums and for the entities that supervise them.

The administration of each museum and historical site included in the service will receive, at the end of the month, by e-mail, a map with a list of the services acquired in the current month. As for the entities supervising the sites, they will receive the above reports as well as a summary report for each day of the month. In the same report, there will be a second part pertaining to the services rendered during each day of the month. A background task will generate all these reports, automatically, at the end of the month and an equivalent Excel sheet, for example, will also be attached for the convenience of the site administrations and entities overseeing the sites. The administration of each museum and historical site included in the service will receive, at the end of the year, by e-mail, a map with a list of the services acquired along the current year. In the same report, there will be a second part pertaining to the services rendered during each month of the year.

Each mobile operator supporting the service will receive, daily, by e-mail, a map with all calls made via its network to any of the Voice Guides Boxes. This map will be sorted by the customer's mobile phone number and each time there is a change in the customer's mobile telephone operator, a partial sum of the duration of the calls will be printed. The mobile operator will know, therefore, the total traffic attributable to its own customers and to each of its roaming partners. A background task will generate all these reports, automatically, at the end of the day and an equivalent Excel sheet, for example, will also be attached for the convenience of the mobile operator. Each mobile operator supporting the service will receive, at the end of the month, by e-mail, a map with all calls made each day via its network to any of the Voice Guides Boxes, grouped, within each day, by mobile operator. A background task will generate all these reports, automatically, at the end of the month and an equivalent Excel sheet, for example, will also be attached for the convenience of the mobile operator. Each mobile operator supporting the service will receive, at the end of the year, by e-mail, a map with all calls made each month via its network to any of the Voice Guides Boxes, grouped, within each month, by mobile operator. A background task will generate all these reports, automatically, at the end of the year and an equivalent Excel sheet, for example, will also be attached for the convenience of the mobile operator.

The Mobile Guide Service provider will receive, daily, monthly and yearly, a combination of all reports to the sites administrations and mobile operators described above. The Mobile Guide Service provider is, therefore, the only entity that shall have a picture of the whole situation. It will also receive reports conceming services that were reset by official 16 at the sites, as calls corresponding to services reset by official 16 are, nevertheless, valid minutes of air time and the Mobile Guide Service provider shall account them as losses. It needs to know, therefore, whether or not these losses are significant. Thus, daily, monthly and yearly reports will be automatically extracted from the Mistaken Calls file. Experience may dictate the need for other types of reports; therefore, the database software should allow an easy preparation of reports.

All the above-mentioned reports can also be extracted manually at any time. Once the correct URL is accessed, a page requesting a user name and password is displayed. As soon as the official 16, be it from the site administration, the entity that supervises the sites, the mobile operators or the Mobile Guide Service provider itself, enters his username and the corresponding password, he is presented with a page displaying the reports he is allowed to generate, pertaining, naturally, to his organization and the role he plays in it. The assignment of passwords and authorizations to the database access are the responsibility of the Database Administrator. The database access mechanisms should permit this flexibility. Naturally, the information obtained will represent the services rendered up to that moment.

Although the service was conceived for use by customers 1 of real sites (thus the use of mobile phones), nothing really prevents it to provide complementary information to a Web site of a museum, historical monument and alike. Therefore, whenever there is an indication in such a Web site that there is information in the Mobile Guide Service that concerns it, the customer 1, 15, 15' can "click" the indicated link and navigate to the Web page of the Mobile Guide Service where he can register to access the service corresponding to the site he was just visiting in the Internet 14. Naturally, the Mobile Guide Service main Web page will also have a window with links to all museums and similar sites supported by the service. In this case, the customer 1, 15, 15' will not "buy the service", he will merely "register at the service" and, from then onwards, his calls to the Mobile Guide Service will be charged as value added calls. The price per minute of the value added call would be clearly signaled in the Web page. The process of registering with the service is very similar to the process of buying the service via the Internet 14. The customer 1, 15, 15' will click on a "register at the service" button and a sub page will pop up requesting the mobile or fixed phone number the customer 1, 15, 15' shall use, country code included, the working idiom and the number of service days required - minimum, one day, maximum, seven days. Once this data is confirmed, the system checks whether or not it already exists a register in the Services file at the DS 10 for the same site web page, telephone number and idiom. If yes, an error message is displayed and the "internaut" 1, 15, 15' is requested to change his input data. If not, a new register is created in the Services file at the DS 10, with the "roaming or surfing" field set to "surfing" and the telephone number of the corresponding Voice Guides Box and the price per minute of the value added call will be displayed. From here onwards, the customer 1, 15, 15' is free to access the service.

Management Reports referring to the use of the Mobile Guide Service while surfing the Web sites of museums, historical monuments and alike will also be produced. Three types of entities will require these reports: the administrations of the museums and historical sites, the telephone network operators that feed the Voice Guides Server and the Mobile Guide Service provider itself. Reports will be generated automatically and sent by e-mail to pre-determined addresses. Each museum and historical site included in the service, as well as its overseeing entities, will receive, daily, monthly and yearly, by e-mail, a map with a list of the registrations occurred during the period, as well as the services rendered during the period. A background task will generate all these reports, automatically, at a pre-determined time of the day and an equivalent Excel sheet, for example, will also be attached for the convenience of the site administrations and overseeing entities. Manual reports can also be extracted following procedures similar to those described above.

Each telephone network operator supporting the service will receive, daily, monthly and yearly, by e-mail, a map with all calls made by customers 1, 15, 15' via its network to any of the Voice Guides Boxes (value added calls) during the period. This map will be sorted by the customer's telephone number and each time there is a change in the customer's telephone number, a partial sum of the duration of the calls will be printed. The operator will know, therefore, the total traffic attributable to each customer 1, 15, 15'. A background task will generate all these reports, automatically, at the end of the period and an equivalent Excel sheet, for example, will also be attached for the convenience of the supporting telephone network operator. These reports can also be extracted manually.

The Mobile Guide Service provider will receive, daily, monthly and yearly, a combination of all reports to the sites administrations and telephone network operators described above. These reports can also be extracted manually.

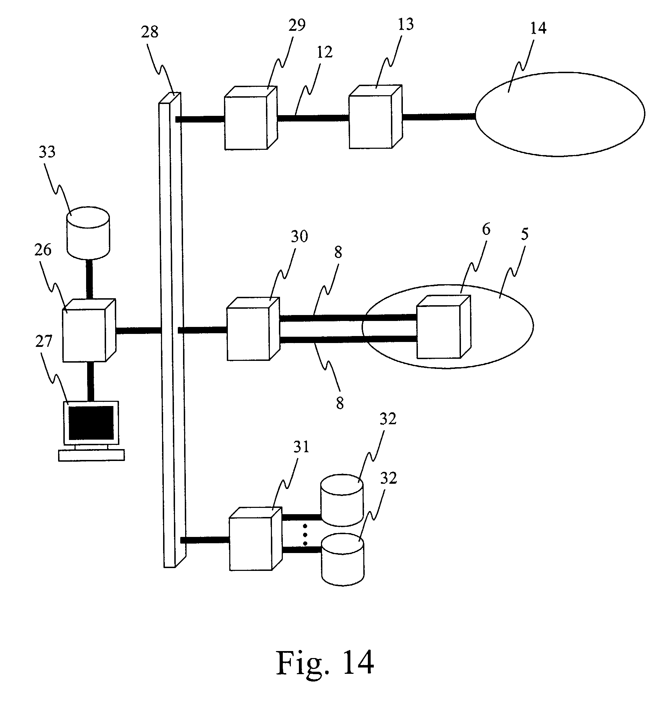

Fig. 14 shows a block diagram of the architecture of the VGS 7 according to a preferred embodiment of the present invention. The VGS 7 is equipped similar to Vocal Mail Systems used by fixed and mobile network operators alike. However, its functions are different, as was described above.

The VGS 7 is a voice-processing platform. It is a real-time computer with special purpose interface boards, housed on a standard 19" rack, for example. These components connect to each other via an internal bus 28 which is provided by a standard bus (VMEBUS, for instance) running along the back of the rack. Its architectural components will be described now in more detail.

The VGS comprises a CPU board 26 which is operated by a operator console 27. Attached to the CPU board 26 is as a storage subsystem a system disk 33 providing storage space for system files. The CPU board 26 is connected to the internal bus 28. This internal bus 28 provides connections for other components such as a disk controller board 31, a telephone signal processor board 30 and a LAN controller board 29.

The disk controller board 31 connects the internal bus 28 of the VGS 7 to voice disks 32 as a storage subsystem providing storage space for the Voice Guides files. The storage subsystems 32 and 33 taken in conjunction with the disk controller 31 represent the storage subsystem 9 of Fig. 1.

The telephone signal processor board 30 connects the internal bus 28 of the VGS 7 to the public telephone operator by appropriate connection means 8 which are E1 links in the preferred embodiment of the present invention. The links 8 connect the VGS 7 to the PTS 6 as already described.

The LAN controller board 29 connects the internal bus 28 of the VGS 7 to the LAN 12, which is connected to the Internet 14 over the TCP/IP router 13, as already described.

In a preferred embodiment the CPU board 26 is made of an off-the-shelf CPU board, with on-board memory, serial and parallel standard interfaces for the connection to the operator's console 27, printer and, possibly, SCSI type system disk 33. The CPU (or CPUs) on the CPU board 26 runs (run) under a real-time operating system. This real-time operating system manages the entire system with the respective voice guides indexes and controls the internal bus. The Acquired Services and Ongoing Calls files are stored in the system disk 33.

The voice disks 32 store the Voice Guides files for all sites under consideration, in the various working idioms, as encoded digital data. Fast access times are mandatory and the various disks might themselves connect to the disk controller 31 via a SCSI bus or SerialATA bus, for example.

The telephone signal processors provided by the telephone signal processor board 30 encode and decode the content of the voice related files such as Voice Guides, voice prompts, voice commands and dial tones, in preparation for further treatment by special purpose software in the CPU. They also deal with the telephone line signaling system. As mentioned above, the connection with the public exchange is made through a certain number of E1 links (2 Mbit/s, 30 PCM channels) 8. These links allow 30 simultaneous telephone connections between the VGS 7 and the customers 1, 15, 15' of the service.

The LAN controller board 29 connects the VGS 7 to the DS 10 via the LAN 12 that, itself, connects with the Internet 14 via the router 13 as described above. In principle, the DS 10 shall be connected to the same LAN 12, as one assumes that it shall be located, physically, near to the VGS 7. In case it is more convenient to install the VGS 7 near to the PTS 6 it is connected to, then the connection with the DS 10 can be done through a virtual LAN via the Internet 14, as already described.

Although conceived so far as a single machine, the VGS 7 can be made of more than one physical platform like the one described above, geographically dispersed, each one providing only for the limited number of sites in the region it is located. All of them, nevertheless, would be managed centrally, via the Internet 14, and would connect seamlessly with the DS 10 as if it were a single virtual machine, as described in the second preferred embodiment related to Fig. 2. Depending on the platform of implementation, this distributed architecture may help reduce the start-up investment and, later on, the transmission costs within the mobile networks 4.

## Claims

1. A database management system, comprising:
a first database server (7) for storing and retrieving units of data and a second database server (10) for controlling said first database server (7), both database servers being connected to each other by network means (12),
wherein said first database server (7) is connected to a mobile network (4) and further controlled via said mobile network (4) by mobile devices of mobile network customers (1, 15') and transmits via said mobile network (4) upon request by said customers (1, 15') the said units of data to said mobile devices of said customers (1, 15'), and
wherein the data units stored in the first database server (7) are organized in voice guides boxes residing in the first database server (7).

2. A database management system according claim 1, wherein said first database server (7) consists of geographically dispersed database servers in order to provide a single virtual database management system distributed to a plurality of said database servers.

3. A database management system according to claim 1, wherein said second database server (10) consists of geographically dispersed database servers in order to provide a single virtual database management system distributed to a plurality of said database servers.

4. A database management system according to one of the preceding claims, wherein said second database server (10) is connected to a computer network (12, 14) for providing access for customers (1, 15, 15') and operators (16), such that said customers (1, 15, 15') can order via said second database server (10) the transmission of data units from said first database server (7) and said operators (16) manage said orders of said customers (1, 15, 15') by said second database server (10).

5. A database management system according to one of the preceding claims, wherein said voice guides boxes contain a predetermined content of data units, which is only readable by the customer (1, 15, 15').

6. A database management system according to one of the preceding claims, wherein in each voice guides box are stored all voice guides for a specific site.

7. A database management system according to one of the preceding claims, wherein said first database server (7) comprises means for receiving information from said second database server (10) and for storing of this information in said first database server (7) in one or more acquired services files in order to manage said orders of said customers (1, 15, 15').

8. A database management system according to one of the preceding claims, wherein said first database server (7) comprises means for changing said stored information by said database management system as response to actions of said customers (1, 15, 15').

9. A database management system according to one of the preceding claims, wherein said first database server (7) comprises means for providing said stored information providing information about the service delivered to the customers (1, 15, 15'), such as status of the service, duration of the service or date and time the service starts being rendered.

10. A method for database management, comprising:
storing and retrieving units of data in a first database server (7);
controlling said first database server via a second database server (10),
both database servers (7, 10) being connected to each other by network means (12);
further controlling said first database server (7) via a mobile network (4) to which it is connected by mobile devices of mobile network customers (1, 15') and transmitting via said mobile network (4) upon request by said customers (1, 15') the said units of data to said mobile devices of the customers (1, 15'), and
organizing the data units stored in the first database server (7) in voice guides boxes residing in the first database server (7).

11. A method for database management according to claim 10, further providing access for customers (1, 15, 15') and operators (16) to said second database server (10) being connected to a computer network (12, 14) such that said customers (1, 15, 15') can order via said second database server (10) the transmission of data units from said first database server (7) and said operators (16) manage said orders of said customers (1, 15, 15') by said second database server (10).

12. A method for database management according to one of the preceding claims, wherein said voice guides boxes contain a predetermined content of data units which is only readable by the customer (1, 15, 15').

13. A method for database management according to one of the preceding claims, wherein in each voice guides box are stored all voice guides for a specific site.

14. A method for database management according to one of the preceding claims, wherein said first database server (7) receives information from said second database server (10) and stores this information in said first database server (7) in one or more acquired services files in order to manage said orders of said customers (1, 15, 15').

15. A method for database management according to one of the preceding claims, wherein said stored information is changed by said database management system as response to actions of said customers (1, 15, 15').

16. A method for database management according to one of the preceding claims, wherein said stored information provides information about the service delivered to the customers (1, 15, 15'), such as status of the service, duration of the service or date and time the service starts being rendered.

17. Computer program comprising program code means for performing all the method steps of anyone of claims 10 to 16 when said computer program is run on a computer.

18. A computer code means stored in a computer readable medium for performing the method of anyone of claims 10 to 16 when said computer program is run on a computer.
